# EUROPÄISCHE PATENTSCHRIFT

(11) **EP 0 505 721 B1**
(45) Veröffentlichungstag und Bekanntmachung des Hinweises auf die Patenterteilung: **30.08.1995**
(21) Anmeldenummer: 92102722.3
(22) Anmeldetag: 19.02.1992
(51) Int. Cl.: G01M 3/22

(54) **Einrichtung zur Dichtheitsprüfung von Rohrverbindungen**
Apparatus for leak testing of pipe joints
Dispositif pour tester l'étanchéité de jonctions de tubes

(30) Priorität: 28.03.1991 DE 4110271; 18.10.1991 DE 4134489
(43) Veröffentlichungstag der Anmeldung: 30.09.1992
(73) Patentinhaber: Weatherford Oil Tool GmbH, 30855 Langenhagen (DE)
(72) Erfinder: Jänsch, Manfred, W-3008 Garbsen 5 (DE)
(74) Vertreter: Arendt, Helmut, Dipl.-Ing.

(56) Entgegenhaltungen:
- EP-A- 0 328 288
- WO-A-84/02978
- DE-C- 3 608 814
- DE-C- 3 700 384
- US-A- 4 136 552
- US-A- 4 507 954

## Beschreibung

Die Erfindung betrifft eine Einrichtung zum Prüfen der Gasdichtigkeit von lösbaren Hohlkörperverbindungen, insbesondere von Rohrverschraubungen und Rohr-Muffenverschraubungen unter Verwendung eines unter hohen Druck setzbaren Prüfgases und eines Meßgerätes zum Erfassen und Anzeigen der die Trennfugen der Hohlkörperverbindungen durchdringenden Gasspuren.

Um Undichtigkeiten an Verbindungen zwischen Kohlkörpern beispielsweise zwischen zwei Rohren, zu beseitigen, ist es üblich, die Verbindungsstelle einer Gasleckprüfung zu unterwerfen. Dabei wird ein unter Druck stehendes Prüfgas auf die Prüfstelle geleitet und der Druck überprüft. Ein Druckabfall des Prüfgases zeigt eine Undichtigkeit an.

Nach einem weiteren Prüfverfahren ist es bekannt, ein Gas durch zwei miteinander verbundene Rohrstücke zu leiten. Dabei wird der Gasdruck mit Hilfe eines Absperrwerkzeuges von innen aufbracht. Ein solches Verfahren und ein Werkzeug Zur Durchführung des Verfahrens sind beispielsweise in der DE-OS 30 30 665 beschrieben. An der Außenseite der Prüfstellen sind Meßinstrumente vorgesehen, mit denen gegebenenfalls austretende Gasspuren angezeigt werden.
Eine weitere Prüfvorrichtung zeigt die US-PS 37 79 068. Sie ist in einen Hohlraum, in welchem eine Verbindungsstelle gegen Luftdurchtritt zu prüfen ist, fahrbar. Sie bildet innerhalb der Hohlraumwände eine ringförmige Prüfkammer. Der Prüfraum wird mit Luft gefüllt und durch Beobachtung eines Druckmessers wird festgestellt, ob der Druck gehalten werden und die Verbindungsstelle als dicht gelten kann. Der Prüfdruck kann nur bescheidene Maße erreichen, da die äußeren Dichtkammern aufgrund ihrer großen Abmessungen nur geringe Drücke zulassen.
Die vorgenannten Ausführungen haben den Nachteil, daß sie erhebliche Gasprüfmittelmengen für die Prüfverfahren benötigen. Das gasförmige Prüfmittel muß bei der Anwendung der bekannten Geräte in großen Mengen erzeugt und komprimiert werden. Große Gasmengen in Verbindung mit hohen Drücken schaffen jedoch erhebliche Gefahren, nicht nur im Bereich des Prüfgerätes selbst, sondern schon am Erzeugergerät und an der von diesem zum Prüfgerät führenden Zuleitung.
Zur Vermeidung dieser Gefahren wurde mit dem Gerät nach der DE-PS 37 00 384 ein Gerät zum Prüfen der Gasdichtigkeit von Verbindungen zwischen Hohlkörpern vorgeschlagen, mit dem die Menge des benötigten gasförmigen Prüfmittels erheblich herabgesetzt werden kann. Dadurch ist die Sicherheit gegen Arbeitsunfälle stark verbessert. Ferner kann die Höhe des Prüfdrucks wesentlich, d.h. weit über 1.000 bar, gesteigert werden. Das vorgenannte Gerät ist jedoch nur in der Lage, die Gasdichtigkeit der Hohlkörper von innen nach außen zu prüfen. Vielfach treten jedoch beim Einsatz von Hohlkörpern in Druckbereichen umgekehrte Verhältnisse auf. Als nur ein Beispiel soll an dieser Stelle der Einsatz von Rohren in Gaskavernen genannt werden. Hierfür ist die Gasdichtigkeit von außen nach innen für eine Prüfung maßgebend. Der Prüfdruck ist also von außen aufzubringen und durch die Verbindung zwischen den Hohlkörpern hindurchtretende Gasspuren müssen im Innenraum erfaßt und gemessen werden. Dazu ist das Gerät nach der DE-PS 37 00 384 nicht in der Lage.
Zur Minimierung des Prüfraums zur Prüfung der Flüssigkeits- oder Gasdichtigkeit von Hohlkörperverbindungen ist nach der US-PS 4,136,552 vorgesehen, den Prüfraum durch zwei mit axialem Abstand zueinander angeordnete Dichtringe zu verschließen, wobei die Dichtringe von außen unter den Druck einer Flüssigkeit gesetzt werden können. Die bekannte Einrichtung ist für die Anwendung außerordentlich hoher Prüfdrücke von z. T. weit mehr als 1000 bar ungeeignet. Der Prüfraum zwischen den Dichtringen ist immer noch verhältnismäßig groß, schon durch die Länge der verwendeten Muffen für eine Rohrverschraubung bedingt.
Die EP-0 328 288 A2 zeigt zwar bereits die Verwendung eines einzelnen elastomeren Dichtrings zur Abdichtung einer Trennfuge, die unter den Druck eines flüssigen Druckmittels setzbar ist. Der durch das flüssige Druckmittel erzeugte Dichtdruck wirkt nur innerhalb des Dichtringes radial auswärts. Die Prüfkammer kann bei Bedarf nicht zusammengepreßt werden, um einen winzigen Prüfraum zu bilden. Bei der Anwendung von Gas als Druck- und Prüfmittel besteht nicht die Möglichkeit, aus Sicherheitsgründen den Dichtdruck größer zu wählen als den Prüfdruck.

Der Erfindung liegt die Aufgabe zugrunde, eine Einrichtung der eingangs genannten Gattung so auszubilden, daß der Prüfraum noch weitgehender verkleinert, insbesondere auf eine winzige Prüfkammer unmittelbar an der zu prüfenden Trennfuge bei gleichzeitiger hermetischer Abdichtung gegen die Atmosphäre verringert werden kann. Die erfindungsgemäße Lösung zeichnet sich durch die Merkmale des Anspruchs 1 aus.

Die erfindungsgemäße Einrichtung gestattet eine gefahrlose Prüfung der Gasdichtigkeit von Verbindungen mit sehr geringen Gasmengen, so daß sehr hohe Prüfdrücke von weit über 1000 bar anwendbar sind. Es können sowohl einfache Trennfugen geprüft werden, bei welchen die Hohlkörperdurchmesser zu beiden Seiten der Trennfuge gleich groß sind, als auch Trennfugen, bei welchen zu beiden Seiten die Hohlkörper einen unterschiedlichen Durchmesser aufweisen, beispielsweise Trennfugen von Rohr-Muffenverbindungen.

Weitere, den Erfindungsgegenstand vorteilhaft gestaltende Merkmale sind in den abhängigen Anspruchen angegeben.

In der Zeichnung sind Ausführungsbeispiele der Erfindung rein schematisch dargestellt und nachstehend erläutert.

Es zeigen:
- Fig. 1: die Gesamtansicht einer Einrichtung beim Einsatz an einem Bohrturm,

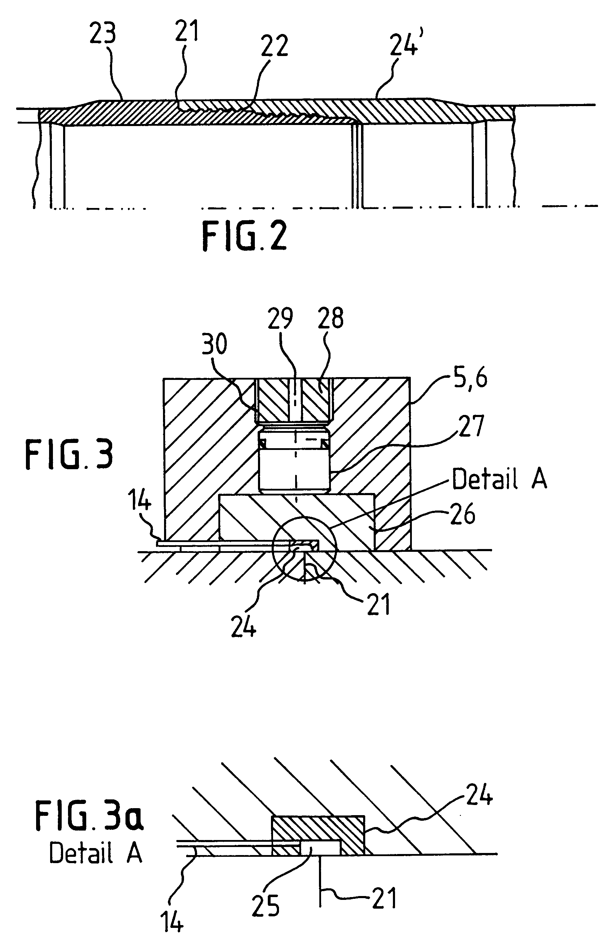

- Fig. 2: den Längsschnitt durch eine Schraubverbindung zweier Rohrenden gleichen Durchmessers,
- Fig. 3: den Querschnitt durch eine Einrichtung im Bereich einer Trennfuge in größerem Maßstab,
- Fig. 3a: einen Querschnitt durch einen Testring mit Gasprüfkammer,
- Fig. 4: die Draufsicht auf eines der beiden Gehäuse einer Gesamteinrichtung, z.T. im Schnitt,
- Fig. 5: einen Längsschnitt durch die Gesamteinrichtung,
- Fig. 6: einen weiteren Längsschnitt durch die Gesamteinrichtung,
- Fig. 7: den Querschnitt durch die Einrichtung im Bereich einer Trennfuge einer Rohr-Muffenverbindung in größerem Maßstab,
- Fig. 7a: eine Prüfkammer, gebildet durch eine Abfasung einer Kante des Testringes,
- Fig. 7b: eine Prüfkammer mit rechteckigem Querschnitt,

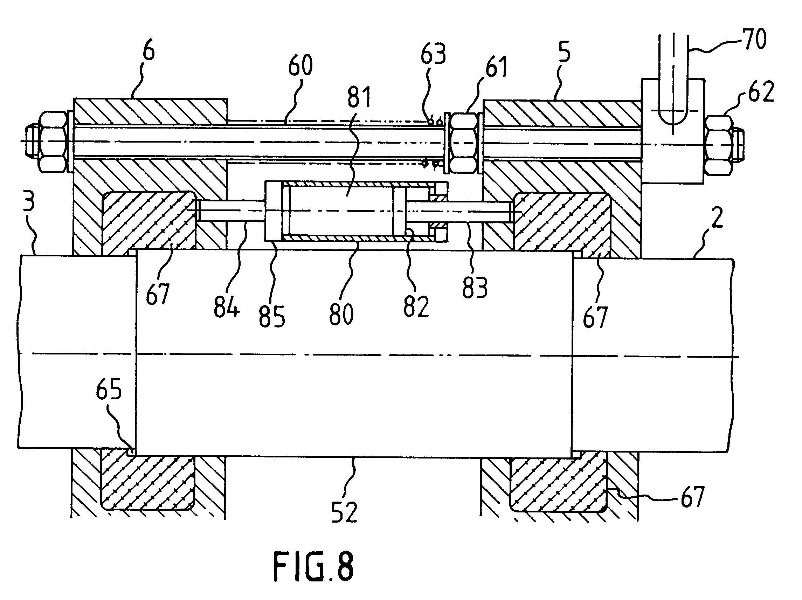

- Fig. 8: die Anordnung eines in Längsrichtung des Prüflings wirkenden Druckzylinders zur Belastung des Dichtkörpers und
- Fig. 9: eine weitere Anordnung von in Längsrichtung wirkenden Druckzylindern.
- Fig.10: den Querschnitt durch eine Einrichtung im Bereich der Trennfuge mit einem Dichtring, der durch ein flüssiges Druckmedium unter Druck setzbar ist, im Ruhezustand,
- Fig.11: die Ausführung gem. Fig. 10, dessen Dichtring unter Druck gesetzt ist.
- Fig.12: eine Einrichtung mit einem Dichtring für den Einsatz zum Prüfen einer Trennfuge zwischen zwei Hohlkörpern unterschiedlicher Durchmesser,
- Fig.13: den Querschnitt durch eine Einrichtung mit einem Dichtring, der mit einem Testring zum Einfassen der Trennfuge versehen ist, wobei die Zuführleitung für das Prüfgas konzentrisch in der Zuführleitung für das Druckmittel angeordnet ist,
- Fig.14: eine Ausführung ähnlich Fig. 13, jedoch mit einer Armierung des Ringspaltes im Dichtkörper,
- Fig.15: die Anordnung von Sicherungsschrauben zur Verhinderung des Verschiebens und Herausfallens seitlicher Stützplatten für den Dichtring und
- Fig. 16: die Anordnung von Halteschrauben zur Verhinderung einer Verschiebung des Dichtringes innerhalb des Gehäuses.

In einem Bohrturm 1 werden die in eine Erdbohrung abzulassenden, miteinander verschraubten Rohre 2 und 3, die zu einem Gesamtrohrstrang gehören, auf Gasdichtigkeit geprüft. Die Prüfstelle ist die Trennfuge der nicht näher dargestellten Rohrverbindung. An Tragseilen 4 ist die aus den Gehäusen 5 und 6 bestehende Einrichtung mit Hilfe der Federn 8 und 9 federnd aufgehängt. Jedes Gehäuse besteht aus zwei Teilen, die eine zu prüfende Trennfuge klammerartig umfassen und drehbeweglich miteinander verbunden sind. Die Scharnierbolzen sind mit 10 bezeichnet. An der dem Scharnierbolzen gegenüberliegenden Seite sind Schließbolzen 11 durch die scharnierförmig ineinanderfassenden Teile 12 und 13 geschoben. Über Kanäle 14 kann Prüfgas zu den Teststellen gedrückt werden.

Das durch Undichtigkeitsstellen in den Innenraum der Rohre 2 bzw. 3 tretende Gas wird durch eine im Innenraum angeordnete Schnüffelklammer 15 aufgefangen und über das Anzeigegerät 16 mit einem Aufzeichnungscomputer für die Leckage 17 angezeigt und aufgezeichnet.

Die Winde 18 für die Schnüffeleinrichtung, die Pumpe 19 für das Prüfgas und ein Kontrollstand 20 sind zu einer Einheit zusammengefaßt.

Zur Überprüfung einer Trennfuge 21 am Ende einer Schraubverbindung 22 zweier Rohrabschnitte 23 und 24' gleichen Durchmessers dient ein Testring 24 U-förmigen Querschnitts, dessen U-förmige Schenkel zu beiden Seiten der Trennfuge 21 an die Umgangsflächen der Rohrabschnitte 23 und 24' gepreßt sind. Dadurch wird eine Prüfkammer 25 gebildet, die über den Verbindungskanal 14 mit Prüfgas versorgt wird. Hierbei wird der Spannkolben 27 durch Druckwasser oder eine gleichwertige Hydraulikflüssigkeit beaufschlagt. Der Spannkolben überträgt den Druck auf den Dichtkörper 26 aus elastomerem Material. Dieses Material verhält sich unter hohem Druck ähnlich wie eine Flüssigkeit und ist dadurch in der Lage, alle Spalten und Trennfugen hermetisch abzudichten. Das Druckwasser kann über Kanäle 29 in der Zylinderabschlußschraube 28 dem Zylinderdruckraum 30 zugeführt werden. Der Spannkolben 27 wird mit entsprechender Kraft gegen den Dichtkörper 26 gepreßt.

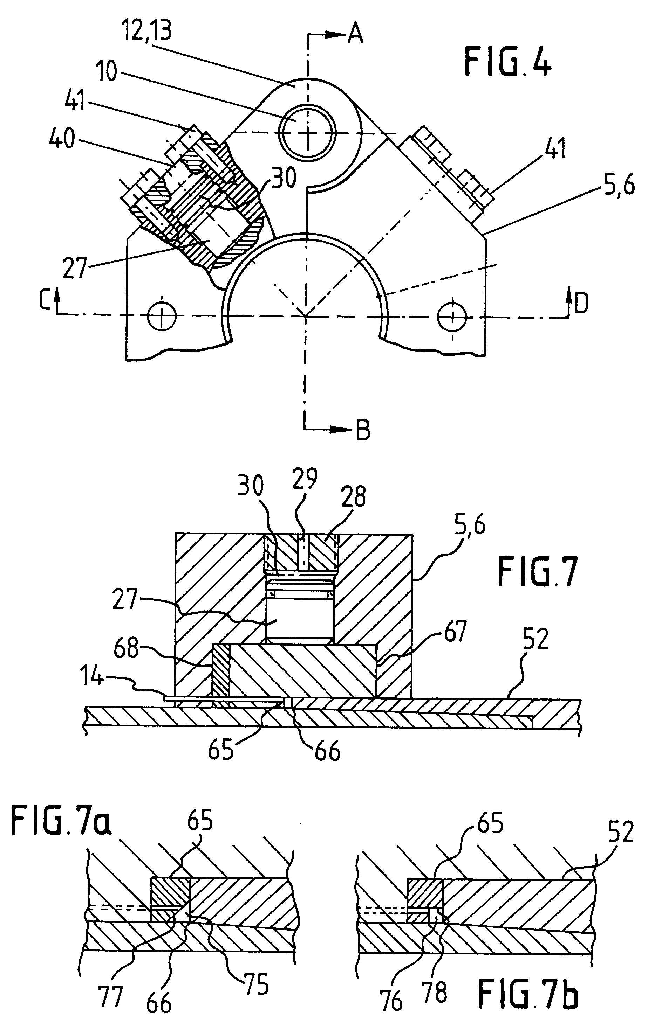

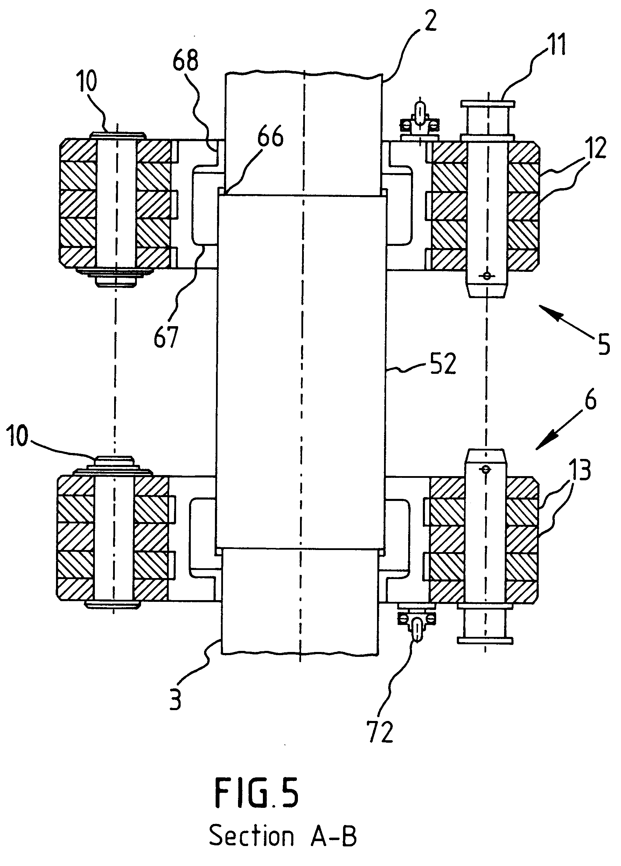

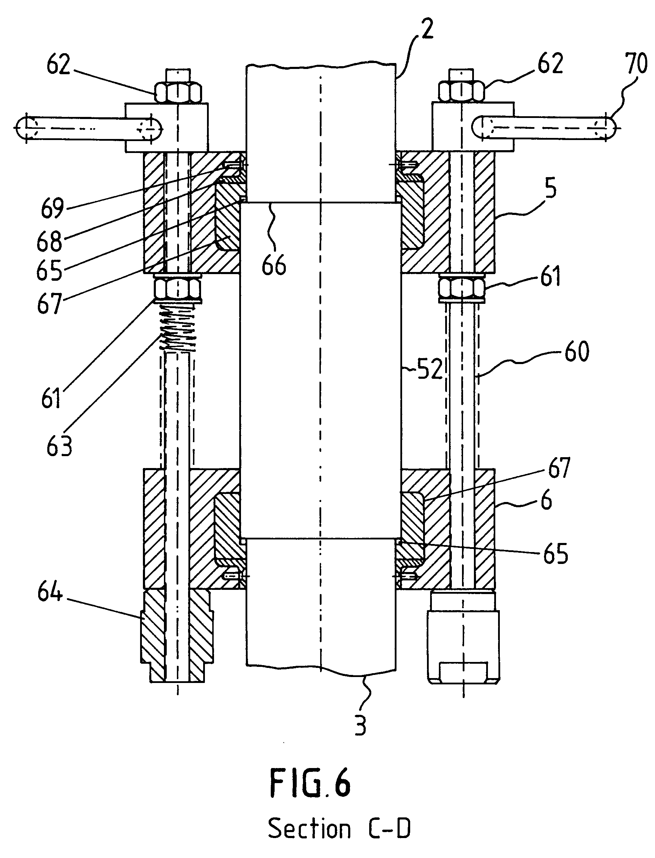

Alternativ können die Spannkolben 27 auch in Rohrlängsrichtung wirkend (axial) angeordnet sein, um die zugehörigen Dichtkörper zu beaufschlagen.
Gemäß Figur 4 ist der Zylinderraum oberhalb des Spannkolbens 27 durch einen mittels Schrauben 41 befestigten Zylinderflansch 40 verschlossen.

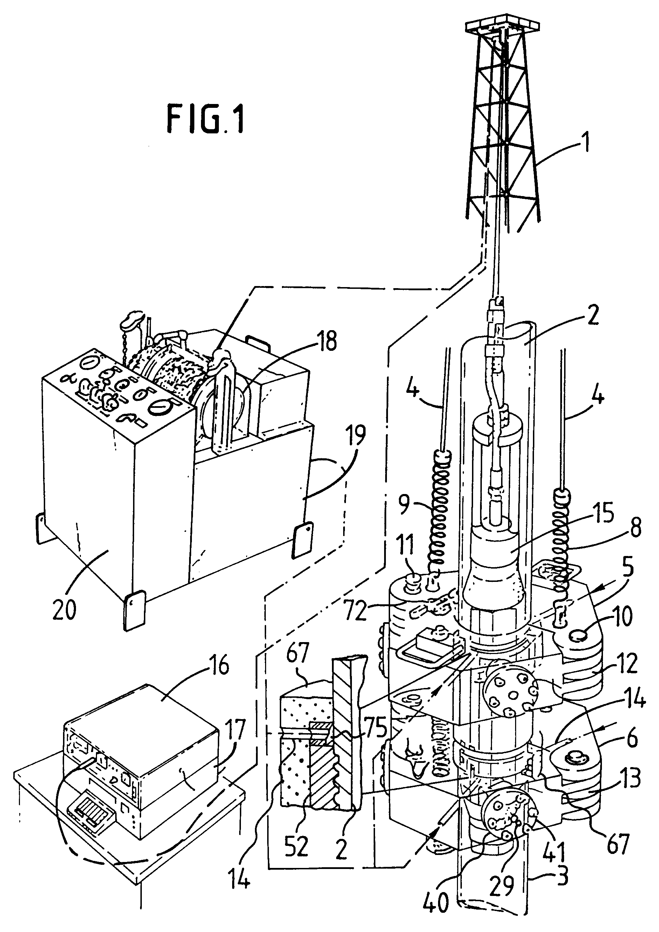

Zur Prüfung der Trennfugen 66 an den Enden einer Rohrmuffe 52 (Fig. 5 und 6) sind gemäß Figuren 1, 5 und 6 zwei Gehäuse 5 und 6 gleichzeitig im Einsatz und über Zuganker 60 miteinander verbunden. Die Zuganker fixieren das obere Gehäuse 5 mit Hilfe von Schraubenmuttern 61 und 62, während das untere Gehäuse 6 auf dem Zuganker 60 verschiebbar ist und durch auf den Zugankern angeordnete Schraubenfedern auf Abstand gehalten wird. Mit den Zugankern 60 verbundene Stellschrauben 64 als Anschläge sichern das untere Gehäuse in seiner unteren Endlage. Zum Schließen der Gehäusehälften sind Schnellspannvorrichtungen 72 vorgesehen, um eine Vorzentrierung zu erreichen und anschließend die Schließbolzen 11 einsetzen zu könnnen.

Die Testringe 65 werden auch hier von Dichtkörpern 67 aus elastomerem Material umfaßt. Zum Ausgleich der unterschiedlichen Außendurchmesser von Rohrmuffe 52 und den dadurch miteinander verbundenen Rohren 2 bzw. 3, sowie der unterschiedlichen Dichtkörper sind Adapterringe 68 vorgesehen, die mittels Schrauben 69 in den Gehäusen gesichert werden können. Mit 70 sind Handgriffe zur Führung der Gehäuse während des Ausrichtens vor einem Einsatz bezeichnet.

Die Prüfkammern 75 und 76 (Fig. 7a und 7b) an Trennfugen 66 von Rohr-Muffenverbindungen können entweder durch eine einfache Abschrägung oder Anfasung 77 bzw. eine einfache Ecknut 78 in Verbindung mit den Rohr- bzw. Muffenflächen gebildet werden, an denen der Testring 65 anliegt.

Die dadurch geschaffenen Prüfräume sind so gering, daß sie ohne Gefahr und rasch mit einem Prüfgas gefüllt und mit dem zum Teil notwendigen, sehr hohen Druck von weit mehr als 1.000 bar versehen werden können.

Bei der Anordnung eines in Längsrichtung des Prüflings wirkenden Druckzylinders 80 wird ein Druckmittel in den Zylinderinnenraum 81 geleitet. Dadurch wird ein Druckkolben 82, an dem ein Stempel 83 befestigt ist, gegen den Dichtkörper 67 gepreßt. Der dem Dichtkörper 67 gegenüberliegende Dichtkörper wird ebenfalls von einem Stempel 84 beaufschlagt. Dieser ist am Boden 85 des Druckzylinders 80 befestigt. Da sich das Material der Dichtkörper ähnlich wie eine Flüssigkeit verhält, pflanzt sich der Druck gleichmäßig nach allen Seiten fort, so daß die Testringe 65 auch bei horizontaler Anordnung der dargestellten Art ausreichend abgedichtet werden.

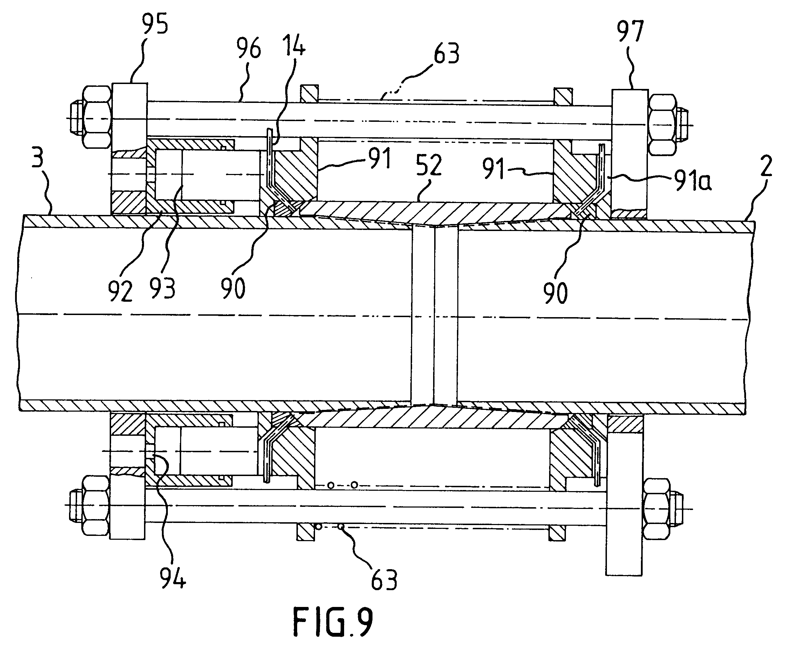

Bei der Ausführung nach Figur 9 entfallen separate Dichtkörper. Bei diesem Ausführungsbeispiel bestehen die Testringe 90 selbst aus einem elastomeren Material und können bei einer Beaufschlagung durch Preßkräfte selbst für eine ausreichende Abdichtung gegen die Umgebungsluft sorgen. Zu diesem Zweck sind sie von Druckringen 91 aus Stahl umfaßt. Diese werden durch die Kraft eines in einem Druckzylinder 92 angeordneten Kolbens 93 beaufschlagt. Mehrere solcher Einheiten können gleichmäßig über den Umfang der Gesamteinrichtung verteilt vorgesehen werden. Der Kolben 93 kann aber auch eine stirnseitig kreisförmige Ausbildung erhalten, um die Druckringe 91 über ihren Umfang gleichmäßig zu belasten. Des Druckzylinder 92 wird Arbeitsmittel über Bohrungen 94 zugeführt. Die direkte Kolbenkraft wird auf den anliegenden Stahldruckring 91 übertragen. Die Reaktionskraft der Kolben-Zylindereinheit wird von einem Anschlagring 95 aufgenommen. Dieser ist verschiebbar auf dem Rohr 3 gelagert und überträgt die Kraft über den Zuganker 96 auf einen zweitenAnschlagring 97, der auf dem zweiten der miteinander zu verbindenden Rohre 2 verschiebbar gelagert ist. Der zweite Anschlagring 97 überträgt dann die Kraft auf den anliegenden Druckstahlring 91 und damit in Längsrichtung auf den zweiten Testring 90 aus elastomerem Material. Die Druckfedern 63 sollen auch hierbei nach Entlastung für ein Auseinanderspreizen der Elemente sorgen. Die den Druck übertragenden Stahlringe 91 sind mit Aussparungen 91 a versehen, um die Einleitung des Testgases über die Zuführleitungen 14 zu ermöglichen.

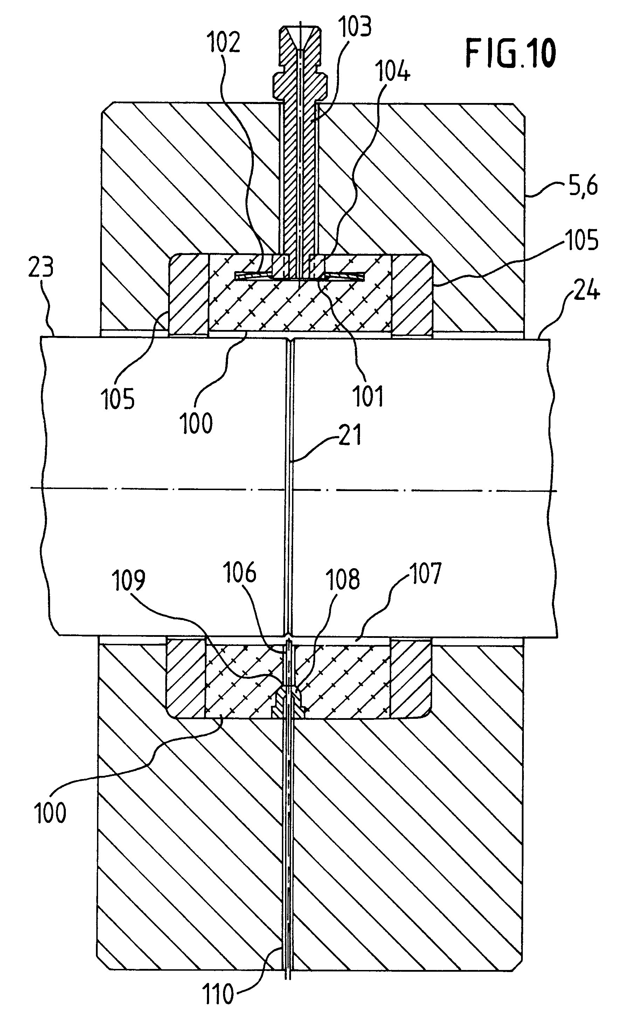

Bei der Ausführung gemäß Fig. 10 ist innerhalb eines Gehäuses 5 bzw. 6, ein Dichtring 100 angeordnet, der nicht durch Spannkolben mit Druck beaufschlagbar ist, sondern einen inneren Ringspalt 101 aufweist, der die zu prüfende Trennfuge mindestens teilweise umfaßt und mit einem flüssigen Druckmittel beaufschlagbar ist. Das flüssige Druckmittel gelangt über mindestens eine das Gehäuse 5 bzw. 6 radial durchsetzende Druckleitung 103 in den Ringspalt. Dieser kann durch eine schalenförmige Stützplatte 102 an der radial äußeren Wand des Ringspalts armiert sein. Dadurch kann sich das Material, das sich zwischen der Stützplatte 102 und dem Gehäuse 5 bzw. 6 befindet, keiner großen Formung unterworfen werden.
Die Leitung 103 für das Druckmittel, beispielsweise Druckwasser, greift mit seinem inneren Ende in eine Gewindehülse 104 Diese ist mit der Stützplatte 102 fest, beispielsweise durch Verschweißung, verbunden.

An beiden Stirnseiten ist der Dichtring 100 von Stützringen 105 eingefaßt. In Umfangsrichtung versetzt zum Druckwasserrohr 103 durchsetzt ein Prüfmittelrohr 106, beispielsweise für Helium, das Gehäuse 5 bzw. 6 und den Dichtring 100 bis in den Prüfraum 107, der im vorliegenden Beispiel durch die Berührungsflächen zwischen dem Dichtring 100 und den Oberflächen der Prüfobjekte, den beiden Rohrenden 23 und 24 sowie den seitlichen Stützringen 105 gebildet wird.

Für das Prüfmittelrohr 106 ist in den Dichtring 100 eine Führungshülse 108 einvulkanisiert. Das Prüfgasrohr 106 ist durch eine Bohrung 109 der Führungshülse 108 bis in den Druckraum 107 geschoben. Zwischen der Bohrung 109 und dem Prüfgasrohr 106 besteht eine enge Spielpassung, so daß bei einer Beaufschlagung des Dichtringes 100 mit Druck das Eindringen von elastomerem Material in die Bohrung 110 des Gehäuses 5 bzw. 6 verhindert wird.

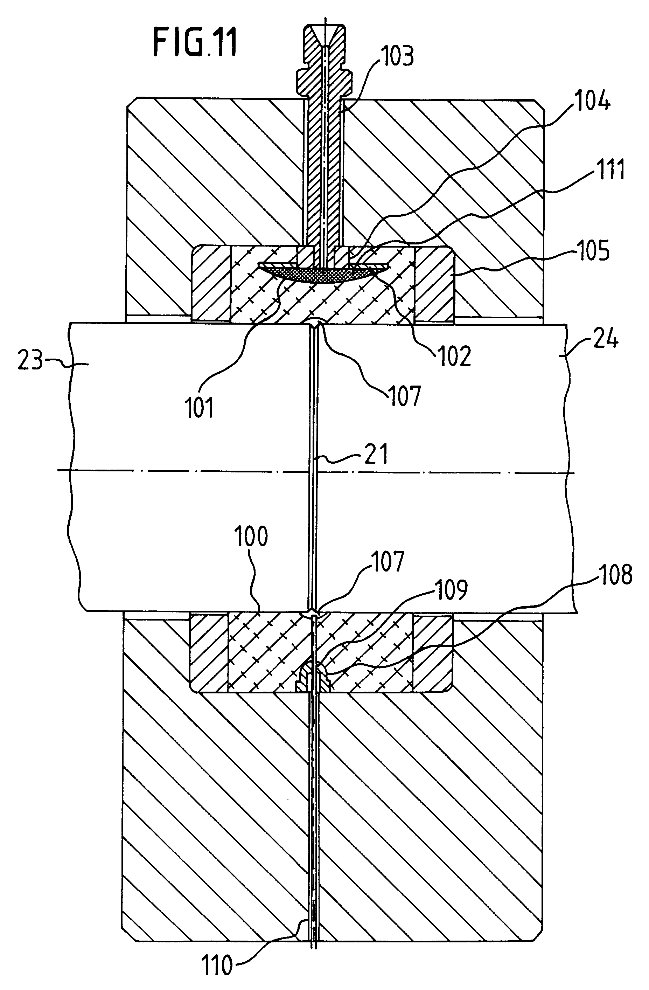

Gemäß Fig. 11 ist zu erkennen, wie der Dichtring 100 die Trennfuge 21 abdichtet und den Prüfraum 107 bis auf einen kleinen ringförmigen Hohlraum verkleinert. Zu diesem Zweck wurde eine Druckflüssigkeit 111 in den Ringspalt 101 geleitet und mit einem sehr hohen Druck beaufschlagt. Unter dem hohen Druck, der einen Wert von 1000 bar und mehr erreichen kann, wird der Ringspalt 101 geweitet und verformt dadurch gleichmäßig den Dichtring über über einen großen Teil seines Umfangs zur Abdichtung der Trennfuge. In den verbleibenden geringen Prüfraum 107 kann sodann Prüfgas über die Zuleitung 106 eingespeist und mit dem gewünschten Prüfdruck gefahrlos beaufschlagt werden.

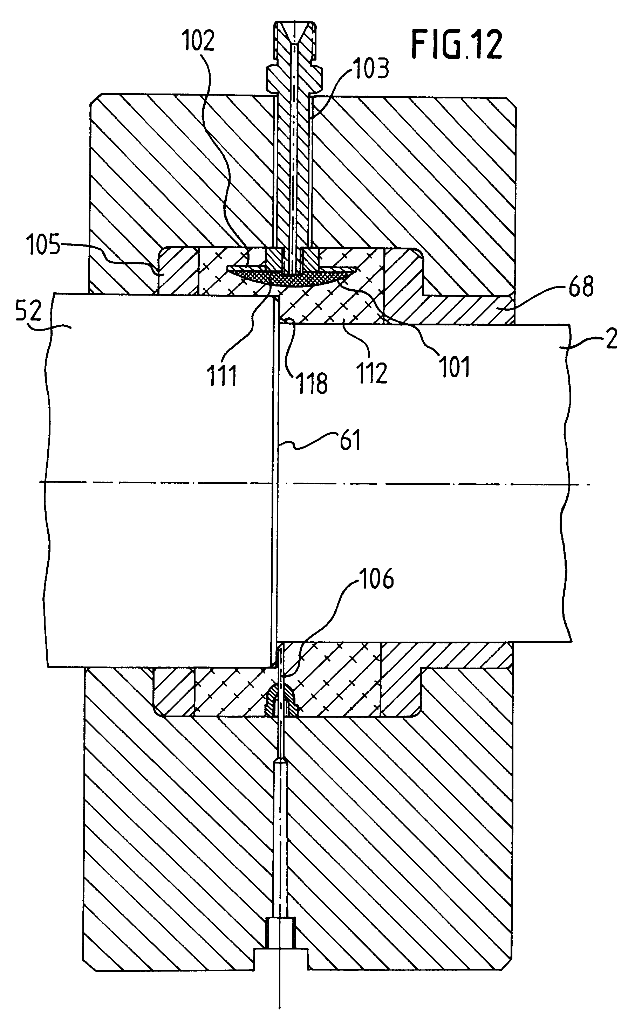

Die Ausführung nach der Fig. 12 unterscheidet sich von der gemäß Fig. 10 und 11 durch einen Dichtring für eine Trennfuge zwischen Hohlkörpern unterschiedlicher Durchmesser. Der Dichtring ist mit 112 bezeichnet und zeigt an der Trennfuge 61 einen Prüfraum, der durch Abschrägung der an der Trennfuge liegenden Kante des Dichtrings entstanden ist. Der Dichtring ist an seinen beiden Stirnseiten von Stützringen eingefaßt, wobei einer der Stützringe als auswechselbarer Adapterring 68 für unterschiedliche Hohlkörperdurchmesser ausgebildet ist. Bei dem gezeigten Beispiel gem. Fig. 12 ist der Ringspalt 101 mit Druckwasser 111 beaufschlagt, so daß die Trennfuge 61 unter Einhaltung eines Prüfraumes 118 auf den Mantelflächen der ineinandergeschraubten Hohlkörper 2 und 52 abgedichtet ist.

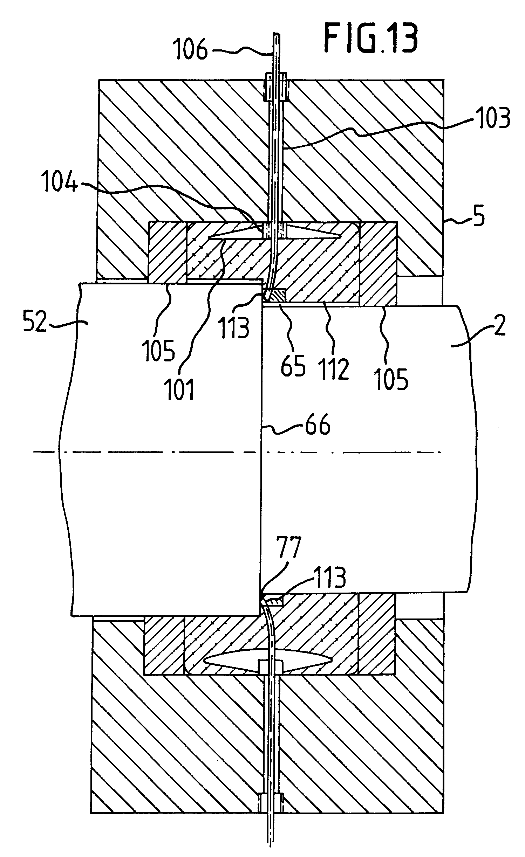

Bei der Einrichtung nach Fig. 13 zeigt der Dichtring 112 einen Ringspalt 101, der an seinen radial äußeren Flächen nicht armiert ist. In diesem Fall befindet sich der Ringspalt dicht an der Gehäusewand 5, so daß bei einer Druckbeaufschlagung die Verformung des elastomeren Materials zwischen dem Ringspalt und der Gehäusewand vernachlässigbar klein ist. Die Wirkung des Ringspaltes auf die Dichtfläche des Ringes ist dadurch nicht beeinträchtigt.
Bei dem gezeigten Beispiel ist in den Dichtkörper ein Testring 65 eingelassen, der durch eine Abschrägung 77 entsprechend der Ausführung nach Fig. 7a die Trennfuge einschließt und mit ihr einen Prüfraum bildet.
Das Prüfgasrohr 106 ist konzentrisch durch ein Druckwasserrohr 103 geführt. Das flüssige Druckmittel tritt dabei durch den Ringspalt zwischen dem Prüfgasrohr 106 und dem Druckwasserrohr 103 in den Ringspalt 101.
In der unteren Bildhälfte der Fig. 13 ist die Druckbeaufschlagung durch eine Weitung des Ringspalts zu erkennen.

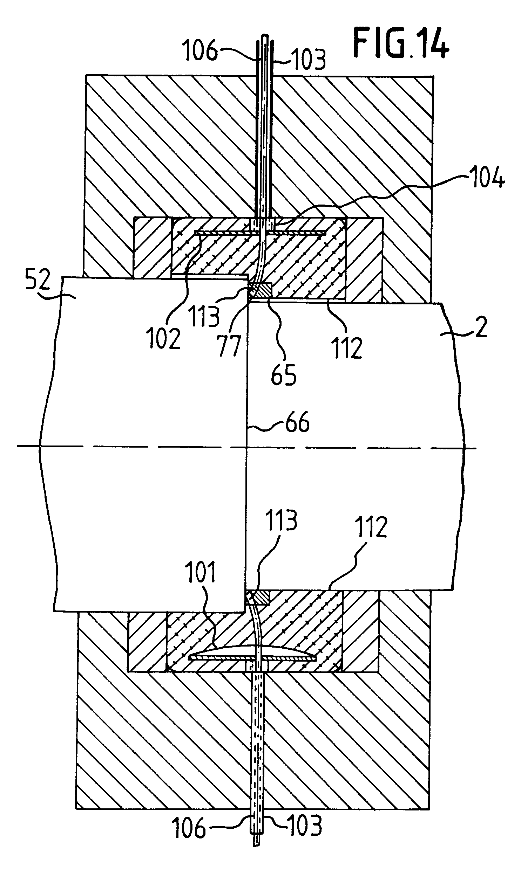

Fig. 14 zeigt eine ganz ähnliche Ausführung wie die Fig. 13, jedoch in Kombination mit einer Stützplatte 102 für den Ringspalt 101. Des Druckwasserrohr ist in eine Gewindehülse 104 geschraubt und enthält konzentrisch das Prüfgasrohr 106. Dieses setzt sich radial einwärts durch den Dichtring 112 bis zum metallenen Testring 65 fort und findet dort seine Fortsetzung in einer Bohrung 113.

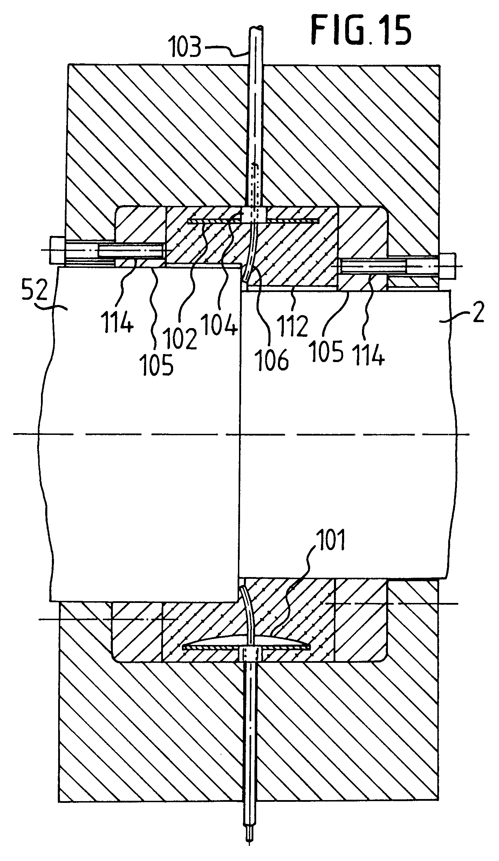

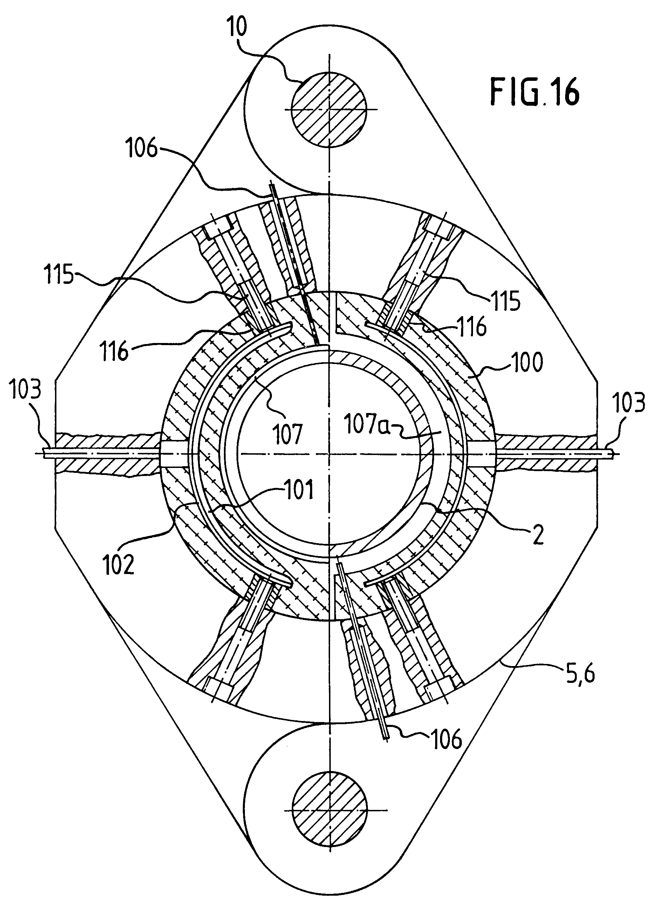

Die Fig. 15 zeigt eine Ausführung ähnlich Fig.14, jedochohne Testring aber mit zusätzlichen Sicherungsschrauben 114, wodurch es den Stütz-ringen 105 und dem Dichtring 112 verwehrt wird, sich in Umfangsrichtung zu verschieben. Die Sicherungsschrauben 114 greifen zu diesem Zweck durch die Stützringe 105 hindurch und üben auf den Dichtring 112 eine Klemmwirkung aus.
Eine alternative Lösung zur Sicherung der Dichtringe gegen eine Verschiebung in Umfangsrichtung zeigt die Fig. 16 mit Sicherungsschrauben 115. Diese sind radial durch das Gehäuse geführt und greifen in Gewindehülsen 116, die in den Dichtring einvulkanisiert sind.
Die linke Bildhälfte der Fig. 16 zeigt die Einrichtung unter Prüfdruck mit einem geweiteten Ringspalt 101 und einem Prüfraum 107 sehr geringen Volumens, während die rechte Bildhälfte den entspannten Zustand der Einrichtung zeigt, wobei sich der Prüfraum 107 zu einem erheblich größeren Zwischenraum 107 a zwischen dem Mantel des Hohlkörpers 2 und dem Innenumfang des Dichtrings 100 bzw. 112 erweitert.
Dadurch, daß die Führungshülsen 116 für die Sicherungsschrauben mit ihren radial äußeren Enden an der Gehäusewand anliegen, wird gleichzeitig ein Aufweiten der Sützplatten 102 an ihren äußeren Enden, also eine unerwünschte Verformung, verhindert.

Der Ringspalt 101 ergibt einen großflächigen Druckraum, durch den das elastomere Material gleichmäßiger und auch mit größerer Kraft gegen die Prüfobjekte gepreßt werden kann, bzw. für einen genügend hohen Anpreßdruck genügt ein geringerer hydraulischer Druck als bei der Verwendung von einzelnen Druckstempeln, die Druckkräfte punktuell auf den Dichtring übertragen. Der Anpreßdruck braucht nur geringfügig über dem Testdruck des Prüfgases gehalten zu werden, um das Durchwandern von Prüfgas nach den Seiten zu verhindern.

## Patentansprüche

1. Einrichtung zum Prüfen der Gasdichtigkeit von lösbaren Hohlkörperverbindungen, insbesondere von Rohrverschraubungen und Rohr-Muffenverschraubungen, unter Verwendung eines unter hohen Druck setzbaren Prüfgases, mit einem Meßgerät zum Erfassen und Anzeigen der die Trennfugen der Hohlkörperverbindungen durchdringenden Gasspuren, dadurch gekennzeichnet, daß zur Prüfung jede Trennfuge (21, 66) von außen von einer Gasprüfkammer (25, 75, 76, 107, 117, 118) sehr geringen Volumens ringförmig umfaßt und diese durch einen an Flächen der verbundenen Hohlkörper (2, 3, 52; 23, 24) zu beiden Seiten der Trennfuge anliegenden Dichtring (26, 67, 90, 100, 112) aus elastomerem Material hermetisch dadurch gegen die umgebende Atmosphäre abgedichtet ist, daß der Dichtring innerhalb eines die Trennfuge umgebenden Gehäuses (5, 6) angeordnet und von außen unter den Druck eines flüssigen Druckmittels setzbar ist, und daß die Gasprüfkammer über mindestens eine Bohrung mit einer Zuführungsleitung (14, 106) für das Prüfgas verbunden ist.

2. Einrichtung nach Anspruch 1, dadurch gekennzeichnet, daß die Gasprüfkammer durch einen die Trennfuge umfassenden und an den Oberflächen der verbundenen Hohlkörper anliegenden Testring (24, 25) gebildet wird, der in den Dichtring aus elastomerem Material eingebettet ist.

3. Einrichtung nach Anspruch 1, dadurch gekennzeichnet, daß die Gasprüfkammer durch den Spalt zwischen den Berührungsflächen des druckbeaufschlagten Dichtringes und den Oberflächen der verschraubten Hohlkörper gebildet wird.

4. Einrichtung nach einem der Ansprüche 1 bis 3, dadurch gekennzeichnet, daß der Dichtring zu beiden Seiten von Stützringen (68, 105) eingefaßt ist.

5. Einrichtung nach Anspruch 2, dadurch gekennzeichnet, daß der Testring (24) einen U-förmigen Querschnitt aufweist, dessen Schenkelenden zu beiden Seiten der Trennfuge (21) an den Hohlkörperaußenwänden anliegen und mit dieser die Gasprüfkammer bilden.

6. Einrichtung nach Anspruch 2, dadurch gekennzeichnet, daß der Testring (65) zur Bildung der Gasprüfkammer (75, 76) an der Trennfuge (66) einer Rohr-Muffenverbindung einen rechteckigen Querschnitt aufweist, dessen Kante an der Trennfuge mit einer Ausklinkung versehen ist.

7. Einrichtung nach Anspruch 2, dadurch gekennzeichnet, daß der Testring (65) zur Bildung der Gasprüfkammer an der Trennfuge einer Rohr-Muffenverbindung einen rechteckigen Querschnitt aufweist, dessen Kante im Bereich der Trennfuge mit einer Abschrägung (77) bzw. Fase versehen ist.

8. Einrichtung nach Anspruch 1, dadurch gekennzeichnet, daß der Dichtring (100, 112) in dem die Prüfkammer umschließenden Gehäuse (5, 6) angeordnet ist und eine ringspaltförmige Druckkammer (101) aufweist, welche über einen Druckleitungsanschluß verfügt und mit der Druckflüssigkeit füllbar ist.

9. Einrichtung nach Anspruch 8, dadurch gekennzeichnet, daß die radial äußere Wandfläche der ringspaltförmigen Druckkammer mit einer im wesentlichen halbzylindrischen Stützplatte (102) armiert ist.

10. Einrichtung nach Anspruch 9, dadurch gekennzeichnet, daß die Stützplatte mit der radial äußeren Wandfläche der Druckkammer durch Vulkanisierung fest verbunden und im Bereich der Druckzuführung mit einer Gewindehülse (104) für den Anschluß eines Druckmittelrohres (103) verschweißt ist.

11. Einrichtung nach Anspruch 9, dadurch gekennzeichnet, daß die Zuführungsleitung (106) für das Prüfgas konzentrisch durch das Druckmittelrohr (103) hindurch zur Gasprüfkammer geführt ist.

12. Einrichtung nach einem der Ansprüche 1 bis 7, dadurch gekennzeichnet, daß der Dichtring in dem die Prüfkammer umschließenden Gehäuse (5, 6) angeordnet und über wenigstens einen Spannkolben (27) unter Druck setzbar ist.

13. Einrichtung nach Anspruch 12, dadurch gekennzeichnet, daß der Spannkolben (27) in einer das Gehäuse der Einrichtung radial durchdringenden zylindrischen Bohrung angeordnet und mit Druckwasser beaufschlagt werden kann.

14. Einrichtung nach Anspruch 12 oder 13, dadurch gekennzeichnet, daß vier jeweils um 90°versetzt am Umfang des Prüflings angeordnete Spannkolben vorgesehen sind.

15. Einrichtung nach einem der Ansprüche 1 bis 14, dadurch gekennzeichnet, daß zum Ausgleich unterschiedlicher Außendurchmesser bei Rohr-Muffenverschraubungen mindestens ein Stützring als Distanz- bzw. Adapterring (68) ausgebildet und zwischen den Dichtring und das Gehäuse der Einrichtung setzbar ist.

16. Einrichtung nach einem der Ansprüche 12 bis 15, dadurch gekennzeichnet, daß der bzw. die Spannkolben in Rohrlängsrichtung wirkend angeordnet sind.

17. Einrichtung nach einem der Ansprüche 1 bis 16, dadurch gekennzeichnet, daß zwei Gehäuse (5, 6) durch Zuganker (60) miteinander verbunden sind.

18. Einrichtung nach Anspruch 17, dadurch gekennzeichnet, daß die Gehäuse (5, 6) geteilt und scharnierartig miteinander verbunden sind.

19. Einrichtung nach Anspruch 18, dadurch gekennzeichnet, daß die Gehäuseteile mit einer Schnellspanneinrichtung (72) zum Vorzentrieren verbunden sind.

20. Einrichtung nach Anspruch 16, dadurch gekennzeichnet, daß zwischen den Gehäusen (5, 6) Kolben-Zylindereinheiten (80, 82, 92, 93) zur Erzeugung der axial gerichteten Dichtkräfte vorgesehen sind.

21. Einrichtung nach Anspruch 16, dadurch gekennzeichnet, daß die Testringe (90) selbst aus einem elastomeren Material gefertigt sind und zur übertragung axialer Druckkräfte von Druckringen (91) aus Stahl eingefaßt sind, welche über eine Kolbenzylindereinheit (92, 93) in Rohrlängsrichtung belastbar sind.

22. Einrichtung nach Anspruch 21, dadurch gekennzeichnet, daß der Kolben (93) den Umfang der Hohlkörperverbindung kreis- oder ringförmig umfaßt.

23. Einrichtung nach einem der Ansprüche 1 bis 22, dadurch gekennzeichnet, daß die Dichtringe durch axial das Gehäuse durchsetzende Schrauben (114) gegen Verschiebung und Herausfallen gesichert sind.

24. Einrichtung nach einem der Ansprüche 1 bis 22, dadurch gekennzeichnet, daß radial gerichtete Schrauben durch das Gehäuse in Gewindehülsen (116) greifen, welche in den Dichtring einvulkanisiert sind und am Gehäuse anliegen.

25. Einrichtung nach einem der Ansprüche 1 - 24, dadurch gekennzeichnet, daß in den Außenumfang eines Dichtringes eine Führungshülse (108) für das den Dichtring durchsetzende Zuleitungsrohr (14, 106) für das Prüfgas eingelassen ist, wobei zwischen der Führungshülse und dem Zuleitungsrohr eine Spielpassung vorgesehen ist.

## Claims

1. An apparatus for testing the gas-tightness of releasable connections between hollow members, more particularly screwed connections between pipes and between pipes and sockets, using a test gas which can be highly pressurized and a measuring apparatus for detecting and displaying traces of gas passing through the connection, characterized in that the joint (21,66) is enclosed in a circle from outside by a gas testing chamber (25, 75, 76, 107, 117, 118) of very small volume and is hermetically sealed against the surrounding atmosphere by a sealing ring (26, 67, 90, 100, 112) of elastomeric material, the sealing ring being disposed inside a casing (5, 6) enclosing the test member and being pressurizable by a liquid pressure medium, and the gas testing chamber being connected via at least one bore to a supply line (14, 106) for the test gas.

2. An apparatus according to Claim 1, characterized in that the gas testing chamber is formed by a test ring (24, 25) which engages around the joint and which bears against the surfaces of the screwed-together hollow members and which is embedded in the sealing ring of elastomeric material.

3. An apparatus according to Claim 1, characterized in that the gas testing chamber is formed by the gap between the contact surfaces of the pressurized sealing ring and the surfaces of the screwed-together hollow members.

4. An apparatus according to one of Claims 1 to 3, characterized in that the sealing ring is framed on both sides by supporting rings (68, 105).

5. An apparatus according to Claim 2, characterized in that the test ring (24) has a U-shaped cross-section the ends of whose arms bear on both sides of the joint (21) against the outer wall of the hollow members and cooperate with said wall to form the gas testing chamber.

6. An apparatus according to Claim 2, characterized in that the test ring (65) for the formation of a gas testing chamber (75, 76) has at the joint (66) of a pipe-and-socket connection a rectangular cross-section whose edge is formed with a release notch at the joint.

7. An apparatus according to Claim 2, characterized in that the test ring (65) for the formation of a gas testing chamber has at the joint of a pipe-and-socket connection a rectangular cross-section whose edge is formed with a chamfer (77) in the zone of the joint.

8. An apparatus according to Claim 1, characterized in that the sealing ring (100, 112) is disposed in a casing (5, 6) enclosing the test members and has a pressure chamber (101) in the form of an annular gap which has a pressure line connection and can be filled with a pressure fluid.

9. An apparatus according to Claim 8, characterized in that the radial outer wall surface of the pressure chamber in the form of an annular gap is reinforced with a substantially semi-cylindrical supporting plate (102).

10. An apparatus according to Claim 9, characterized in that the supporting plate is rigidly connected by vulcanization to the radially outer wall surface of the pressure chamber and is welded in the zone of the pressure supply to a threaded sleeve (104) for the connection of a pressure medium pipe (103).

11. An apparatus according to Claim 9, characterized in that the supply line (106) for the test gas extends concentrically through the pressure medium pipe (103) to the gas testing chamber.

12. An apparatus according to one of Claims 1 to 7, characterized in that the sealing ring is disposed in a casing (5, 6) enclosing the test member and can be pressurized via at least one clamping piston (27).

13. An apparatus according to Claim 12, characterized in that the clamping piston (27) is disposed in a cylindrical bore extending radially through the casing of the apparatus and can be acted upon by pressurized water (hydraulic system).

14. An apparatus according to Claim 12 or 13, characterized in that four clamping pistons are provided, each disposed off-set by 90° along the periphery of the test piece.

15. An apparatus according to one of Claims 1 to 14, characterized in that to compensate for different external diameters in the case of pipe-and-socket screwed connections, at least one supporting ring is constructed as a spacer or adaptor ring (68) and can be inserted between the sealing ring and the casing of the apparatus.

16. An apparatus according to one of Claims 12 to 15, characterized in that the or each clamping piston is disposed to act in the pipe longitudinal direction (axially).

17. An apparatus according to one of Claims 1 to 16, characterized in that two casings (5, 6) are interconnected via tie rods (60).

18. An apparatus according to one of Claims 1 to 17, characterized in that the casings (5, 6) are divided and interconnected hinge-fashion.

19. An apparatus according to Claim 18, characterized in that the casing parts are connected to a rapid clamping device (72) for precentring.

20. An apparatus according to Claim 16, characterized in that piston-and-cylinder units (80, 82, 92, 93) are provided between the casings (5, 6) to generate the axially directed sealing forces.

21. An apparatus according to Claim 16, characterized in that the test rings (90) are themselves made from an elastomeric material and for the transmission of axial pressure forces are framed by steel pressure rings (91) which can be loaded in the longitudinal direction of the pipe via a piston-and-cylinder unit (92, 93).

22. An apparatus according to Claim 21, characterized in that the piston (93) encloses the periphery of the hollow members connection in a circle or ring.

23. An apparatus according to one of Claims 1 to 22, characterized in that the sealing rings are secured against displacement and dropping out by screws (114) extending axially through the casing.

24. An apparatus according to one of Claims 1 to 22, characterized in that radially directed screws engage through the casing in threaded sleeves (116) which are vulcanized into the sealing ring and bear against the casing.

25. An apparatus according to one of Claims 1 to 24, characterized in that a guide sleeve (108) for the test gas supply pipe (14, 106) which extends through the outer periphery of the sealing ring is let into the external periphery thereof, a clearance fit being provided between the guide sleeve and the supply pipe.

## Revendications

1. Installation pour tester l'étanchéité au gaz d'assemblages amovibles à corps creux, notamment de raccords vissés et d'assemblages tubulaires à manchon fileté, en utilisant un gaz de test pouvant être soumis à une pression élevée, avec un appareil de mesure pour détecter et indiquer les traces de gaz passant à travers les fentes de séparation des assemblages de corps creux, caractérisée en ce que pour le test, chaque fente de séparation (21, 66) est entourée de façon annulaire de l'extérieur par une chambre de contrôle de gaz (25, 75, 76, 107, 117, 118) d'un très petit volume et que celle-ci est rendue étanche par rapport à l'atmosphère environnante de manière hermétique par une bague d'étanchéité (26, 67, 90, 100, 112) en un élastomère s'appliquant aux faces des corps creux reliés (2, 3, 52; 23, 24) aux deux côtés de la fente de séparation, en ce que la bague d'étanchéité est disposée à l'intérieur d'un boîtier (5, 6) entourant la fente de séparation et peut être mis, de l'extérieur, sous la pression d'un milieu de pression liquide, et en ce que la chambre de contrôle de gaz est reliée par au moins un perçage à un conduit d'amenée (14, 106) du gaz de test.

2. Installation selon la revendication 1, caractérisée en ce que la chambre de contrôle de gaz est formée par une bague de test (24, 25) entourant la fente de séparation et s'appliquant aux surfaces des corps creux reliés, qui est noyée dans la bague d'étanchéité en élastomère.

3. Installation selon la revendication 1, caractérisée en ce que la chambre de contrôle de gaz est formée par la fente entre les faces de contact de la bague d'étanchéité soumise à la pression et les surfaces des corps creux vissés.

4. Installation selon l'une des revendications 1 à 3, caractérisée en ce que la bague d'étanchéité est entourée des deux côtés par des bagues d'appui (68, 105).

5. Installation selon la revendication 2, caractérisée en ce que la bague de test (24) a une section transversale en forme de U dont les extrémités de branche s'appliquent aux deux côtés de la fente de séparation (21) aux parois extérieures de corps creux et forment avec celle-ci la chambre de contrôle de gaz.

6. Installation selon la revendication 2, caractérisée en ce que la bague de test (65) pour former la chambre de contrôle de gaz (75, 76) présente à la fente de séparation (66) d'un assemblage tubulaire à manchon fileté une section transversale rectangulaire dont l'arête à la fente de séparation est pourvue d'un déclenchement.

7. Installation selon la revendication 2, caractérisée en ce que la bague de test (65) pour former la chambre de contrôle de gaz présente à la fente de séparation d'un assemblage tubulaire à manchon fileté une section transversale rectangulaire dont l'arête est pourvue au voisinage de la fente de séparation d'un chanfrein (77) ou d'un biseau.

8. Installation selon la revendication 1, caractérisée en ce que la bague d'étanchéité (100, 102) est disposée dans le boîtier (5, 6) entourant la chambre de contrôle et présente une chambre de pression (101) en forme de fente annulaire qui dispose d'un raccord de conduite de pression et qui peut être remplie avec le liquide sous pression.

9. Installation selon la revendication 8, caractérisée en ce que la face de paroi radialement extérieure de la chambre de pression en forme de fente annulaire est armée d'une plaque de support (102) essentiellement demi-cylindrique.

10. Installation selon la revendication 9, caractérisée en ce que la plaque de support est reliée solidement à la face de paroi radialement extérieure de la chambre de pression par vulcanisation et qu'elle est soudée au voisinage de l'amenée de la pression à une douille filetée (104) pour le raccordement d'un tuyau de fluide sous pression (103).

11. Installation selon la revendication 9, caractérisée en ce que le conduit d'amenée (106) pour le gaz de test est guidé concentriquement à travers le tuyau de fluide sous pression (103) vers la chambre de contrôle de gaz.

12. Installation selon l'une des revendications 1 à 7, caractérisée en ce que la bague d'étanchéité est disposée dans le boîtier (5, 6) entourant la chambre de test et peut être mise sous pression par au moins un piston tendeur (27).

13. Installation selon la revendication 12, caractérisée en ce que le piston tendeur (27) est disposé dans un perçage cylindrique traversant radialement le boîtier de l'installation et peut être sollicité avec de l'eau sous pression.

14. Installation selon la revendication 12 ou 13, caractérisée en ce que quatre pistons tendeurs, décalés respectivement de 90°, sont disposés sur le pourtour du corps d'essai.

15. Installation selon l'une des revendications 1 à 14, caractérisée en ce que pour l'équilibrage de diamètres extérieurs différents dans des assemblages tubulaires à manchon fileté, on réalise au moins une bague d'appui comme bague d'écartement ou d'adaptation (68) et qui peut être placée entre l'anneau d'étanchéité et le boîtier de l'installation.

16. Installation selon l'une des revendications 12 à 15, caractérisée en ce que le ou les pistons tendeurs sont disposés de façon à agir dans la direction longitudinale du tuyau.

17. Installation selon l'une des revendications 1 à 16, caractérisée en ce que deux boîtiers (5, 6) sont reliés l'un à l'autre par des tirants d'ancrage.

18. Installation selon la revendication 17, caractérisée en ce que les boîtiers (5, 6) sont divisés et reliés l'un à l'autre à la manière d'une charnière.

19. Installation selon la revendication 18, caractérisée en ce que les parties de boîtier sont reliées à un dispositif tendeur rapide (72) en vue du précentrage.

20. Installation selon la revendication 16, caractérisée en ce que des unités à piston et à cylindre (80, 82, 92, 93) sont prévues entre les boîtiers (5, 6) pour produire des forces d'étanchéité orientées axialement.

21. Installation selon la revendication 16, caractérisée en ce que les bagues d'essai (90) sont réalisées elles-mêmes en une matière d'élastomère et sont encerclées par des bagues de pression (91) en acier pour la transmission de forces de pression axiales qui peuvent être chargées par une unité à piston et à cylindre (92, 93) dans la direction longitudinale du tuyau.

22. Installation selon la revendication 21, caractérisée en ce que le piston (93) entoure de façon circulaire ou annulaire le pourtour de l'assemblage de corps creux.

23. Installation salon l'une des revendications 1 à 22, caractérisée en ce que les bagues d'étanchéité sont assurées par des vis (114) traversant axialement le boîtier contre un déplacement et une chute.

24. Installation selon l'une des revendications 1 à 22, caractérisée en ce que des vis orientées radialement passent à travers le boîtier dans des douilles filetées (116) qui sont introduites par vulcanisation dans la bague d'étanchéité et s'appliquent au boîtier.

25. Installation selon l'une des revendications 1 à 24, caractérisée en ce qu'un manchon de guidage (108) est introduit dans le pourtour externe d'une bague d'étanchéité pour le tuyau d'amenée (14, 106) du gaz de test traversant la bague d'étanchéité, et entre le manchon de guidage et le tuyau d'amenée est prévu un ajustement avec jeu.
